# EUROPÄISCHE PATENTANMELDUNG

(11) **EP 4 138 273 A1**
(43) Veröffentlichungstag der Anmeldung: **22.02.2023**
(21) Anmeldenummer: 21191713.3
(22) Anmeldetag: 17.08.2021
(51) Int. Cl.: H02K 1/276, H02K 15/03, H02K 15/12

(54) **ROTOR MIT UNTERSCHIEDLICHEN BLECHEN**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft einen Rotor (5) einer dynamoelektrischen permanenterregten Maschine (1) mit einer vorgebbaren Anzahl von Polen (27),
- wobei das Blechpaket (30) aus zumindest zwei unterschiedlichen Einzelblechen - erste Bleche (81) und zweite Bleche (82) - in vorgebbarer axialer Reihenfolge aufgebaut ist, die jeweils eine Wellenbohrung (26), jeweils axial fluchtende Bohrungen (22), identische Anzahl von Polen (27), axial fluchtende Ausnehmungen (21) und identischen Außendurchmesser aufweisen,
- wobei die ersten Bleche (81) zusätzlich zumindest bei einem Pol (27), Schlitze (32) ausgehend von der zugordneten Bohrung (22) zu der zugehörigen Ausnehmung (21) bzw. Ausnehmungen (21) des Pols (27) aufweisen, so dass sich nach einer sich wiederkehrenden Abfolge von einer vorgebbaren Anzahl von ersten Blechen (81) und zweiten Blechen (82) Zuflusskanäle (23) zu den Polen (27) bilden,
- wobei die Zuflusskanäle (23), die Flusssperren (13), die Bohrungen (22) und die im Wesentlichen axial verlaufenden Spalte zwischen dem Permanentmagneten (9) und dem jeweilig ihn umgebenden Blechpaket (3) durch einen Kleber und/oder eine Vergussmasse (20) ausgefüllt sind.

## Beschreibung

Die Erfindung betrifft einen Rotor einer permanenterregten dynamoelektrischen Maschine, ein Verfahren zur Herstellung eines Rotors einer permanenterregten dynamoelektrischen Maschine, eine permanenterregte dynamoelektrischen Maschine mit einem derartigen Rotor, als auch eine Verwendung einer permanenterregten dynamoelektrischen Maschine.

Industrielle Niederspannungsmotoren (<1KV Nennspannung) vor allem in den Wirkungsgradklassen IE4 und höher, weisen üblicherweise Rotoren mit Permanentmagneten auf. Dabei werden die Permanentmagnete in die hierfür vorgesehenen Taschen des Blechpakets des Rotors eingebracht (sogenannte vergrabene Permanentmagnete).

Nach dem Einbringen der Permanentmagnete in die Taschen müssen diese Permanentmagnete mit dem Blechpaket des Rotors fixiert werden. Damit soll ein Spiel zwischen Blechpaket und Permanentmagneten vermieden werden, das bei mechanischen Einwirkungen, wie Vibrationen und Fliehkräften während des Betriebs der permanenterregten dynamoelektrischen Maschine oder aufgrund von Magnetkräfte eine Positionsänderung der Permanentmagnete verursacht.

Üblicherweise werden die Permanentmagnete hierfür mittels eines reaktiven Kunststoffklebers in die Taschen geklebt.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (Ofen, z.B. 140°C für 2h) gehärtet werden muss. Zum einen ist hierbei das Aufheizen und Abkühlen des gesamten Rotors ein zeit- und kostspieliger Prozessschritt zum anderen können derartige Temperaturen zu einer Teilentmagnetisierung der Permanentmagnete führen.

Die Auslegung von derartigen Blechen für Rotoren ist ein Kompromiss aus unterschiedlichen, miteinander konkurrierenden Anforderungen hinsichtlich der elektromagnetischen und mechanischen Eigenschaften und der Eignung zur prozesssicheren Produktion von derartigen Rotoren.

Bisher folgt die Auslegung der derartiger Rotorbleche streng symmetrisch, wobei ein Kompromiss aus elektromagnetischen, mechanischen und fertigungstechnisch relevanten Eigenschaften gesucht wird. Oftmals wird gezielt nach einer Eigenschaft optimiert, was Nachteile bei anderen Anforderungen nach sich zieht. Beispielsweise führt eine Optimierung hinsichtlich fertigungstechnischer Eigenschaften, wie größere Spalte zum Fügen und Verkleben der Magneten zu einer Reduzierung des Wirkungsgrades der permanenterregten dynamoelektrischen Maschine. Eine Optimierung des Wirkungsgrades führt zu einer eingeschränkten Rotorfestigkeit und damit reduzierter Drehzahltauglichkeit und Problemen bei der Produktion des Rotors.

Die DE 10 2009 054 584 A1 zeigt einen Rotor für eine Elektromaschine, umfassend übereinander zu einem Lamellenpaket angeordnete Lamellen, in dem Lamellenpaket ausgebildete Taschen zur Aufnahme von Permanentmagneten und in den Taschen angeordnete Permanentmagnete, die stoffschlüssig mit einem Verbindungsstoff an dem Lamellenpaket befestigt sind, wobei das Lamellenpaket mit wenigstens einer Ausnehmung zum Einbringen des Verbindungsstoffs versehen ist.

Nachteilig dabei ist u.a., dass die dort als Ausnehmungen bezeichneten Steigkanäle im Bereich des magnetischen Flusses angeordnet sind und somit zu einer vergleichsweise geringen Effizienz einer permanenterregten dynamoelektrischen Maschine mit einem derartigen Rotor führen.

Ausgehend davon liegt der Erfindung die Aufgabe zugrunde einen Rotor zu schaffen, um eine Effizienz- und Wirkungsgradsteigerung einer permanenterregten dynamoelektrischen Maschine zu erhalten. Dabei soll die Herstellung eines derartigen Rotors vergleichsweise einfach sein, und vergleichsweise wenig Prozessschritte bei der Herstellung erfordern. Außerdem soll die Verwendung des Rotors in einer permanenterregten dynamoelektrischen Maschine bei unterschiedlichsten Antriebsaufgaben vergleichsweise günstige Verbrauchsdaten liefern.

Die Lösung der gestellten Aufgabe gelingt durch einen Rotor einer dynamoelektrischen permanenterregten Maschine mit einer vorgebbaren Anzahl von Polen,
- wobei die Pole des Rotors jeweils durch einen oder mehrere Permanentmagnete gebildet sind,
- wobei die Permanentmagnete in im Wesentlichen axial verlaufenden, umfänglich geschlossenen Ausnehmungen eines Blechpakets angeordnet sind,
- wobei die Ausnehmungen, Bereiche von Taschen, zur Aufnahme der Permanentmagnete und Flusssperren, zur Führung eines Magnetflusses aufweisen, in welche Ausnehmungen zumindest abschnittsweise Halteelemente ragen,
- wobei radial innerhalb jedes Poles ein oder mehrere axial verlaufende Bohrungen im Blechpaket vorgesehen sind,
- wobei das Blechpaket aus zumindest zwei unterschiedlichen Einzelblechen - erste Bleche und zweite Bleche - in vorgebbarer axialer Reihenfolge aufgebaut ist, die jeweils eine Wellenbohrung, jeweils axial fluchtende Bohrungen, identische Anzahl von Polen, axial fluchtende Ausnehmungen und identischen Außendurchmesser aufweisen,
- wobei die ersten Bleche zusätzlich zumindest bei einem Pol, Schlitze ausgehend von der zugordneten Bohrung zu der zugehörigen Ausnehmung bzw. Ausnehmungen des Pols aufweisen, so dass sich nach einer sich wiederkehrenden Abfolge von einer vorgebbaren Anzahl von ersten Blechen und zweiten Blechen Zuflusskanäle zu den Polen bilden,
- wobei die Zuflusskanäle, die Flusssperren, die Bohrungen und die im Wesentlichen axial verlaufenden Spalte zwischen dem Permanentmagneten und dem jeweilig ihn umgebenden Blechpaket durch einen Kleber und/oder eine Vergussmasse ausgefüllt sind.

Die Lösung der gestellten Aufgabe gelingt auch durch eine permanenterregte dynamoelektrische Maschine, insbesondere permanenterregte Synchronmaschine mit einem erfindungsgemäßen Rotor.

Die Lösung der gestellten Aufgabe gelingt auch durch ein Verfahren zur Herstellung eines Rotors einer dynamoelektrischen permanenterregten Maschine durch folgende Schritte:
- Paketieren eines Blechpakets aus axial geschichteten Blechen mit mindestens zwei unterschiedlichen Blechen, ersten Blechen und zweiten Blechen in vorgebbarer axialer Reihenfolge, welche Bleche zumindest einen gleichen Durchmesser, eine gleiche Anzahl von Polen, einen gleichen Außendurchmesser, axial fluchtende Ausnehmungen und axial fluchtende Bohrungen aufweisen,
- wobei die Ausnehmungen, Bereiche von Taschen, zur Aufnahme der Permanentmagnete und Flusssperren, zur Führung eines Magnetflusses aufweisen,
- wobei die Pole des Rotors jeweils durch einen oder mehrere Permanentmagnete gebildet werden,
- wobei die ersten Bleche zumindest bei einem Pol zumindest einen Schlitz von der Bohrung zu den jeweiligen Ausnehmungen aufweisen, wobei die ersten Bleche nach einer vorgebbaren Anzahl von weiteren Blechen, insbesondere zweiten Blechen um einen Pol weitergedreht werden, so dass jeder Pol in vorgebbaren axialen Abständen Zuflusskanäle aufweist,
- Einsetzen von Permanentmagneten in die Ausnehmungen,
- Anbringen einer Verteilscheibe an zumindest einer Stirnseite des Blechpakets, mit zumindest einer Zuführöffnung und zumindest einem Ringkanal auf der dem Blechpaket zugewandten Seite, der die Bohrungen bedeckt,
- Vergießen der Hohlräume, insbesondere die Zuflusskanäle, die Flusssperren, die Bohrungen und die im Wesentlichen axial verlaufenden Spalte zwischen den Permanentmagneten und dem jeweilig ihn umgebenden Blechpaket durch einen Kleber und/oder eine Vergussmasse, so dass zumindest die Permanentmagnete fixiert werden.

Die Lösung der gestellten Aufgabe gelingt auch durch die Verwendung eines erfindungsgemäßen Rotors bei dynamoelektrischen Maschinen, insbesondere einer permanenterregten Synchronmaschine, die Kompressoren, Verdichter, Pumpen, Förderbänder, Arbeitsmaschinen in der Nahrungsmittelindustrie und Maschinen bei maritimen Anwendungen z.B. in Schiffen antreibt.

Erfindungsgemäß wird nunmehr ein Kompromiss erzielt, der aus unterschiedlichen, miteinander konkurrierenden Anforderungen hinsichtlich der elektromagnetischen und mechanischen Eigenschaften und der Eignung zur prozesssicheren Produktion von derartigen Rotoren zu einer hocheffizienten dynamoelektrischen Maschine führt, die für unterschiedlichste Antriebsaufgaben geeignet ist.

Erfindungsgemäß führt die Entflechtung von miteinander konkurrierenden Anforderungen hinsichtlich der elektromagnetischen und mechanischen Eigenschaften und der Eignung zur prozesssicheren Produktion von derartigen Rotoren zu unterschiedlichen Blechen eines Rotors, die jeweils unterschiedliche Aufgaben hinsichtlich der oben genannten Anforderungen erfüllen.

Durch die Optimierung des jeweiligen Blechdesigns eines Blechs auf möglich wenige Anforderungen werden u.a. die elektromagnetischen und mechanischen Eigenschaften des mit Permanentmagneten bestückten Blechpakets und damit des Rotors verbessert. Damit wird, neben der vergleichsweise einfachen Fertigung des Rotors, ein effizienter Betrieb einer dynamoelektrischen permanenterregten Maschine, insbesondere einer permanenterregten Synchronmaschine, gewährleistet.

Als Blechpaket wird dabei der aktive Teil des Rotors verstanden, der mit Permanentmagneten versehen ist und zur Drehmomentbildung beiträgt, nicht jedoch eventuelle Verteilscheiben und/oder Abschlussscheiben am stirnseitigen Ende des Blechpakets des Rotors.

Als Ausnehmungen im Blechpaket bzw. in den jeweiligen Blechen sind dabei Ausstanzungen der einzelnen Bleche zu verstehen, die paketiert, axial hintereinander angeordnet sind. Die Ausnehmungen weisen sowohl Taschen als auch die Flusssperren auf. Die Taschen sind zur Aufnahme der oder des Permanentmagneten vorgesehen. In den Raum der Ausnehmungen ragen optional Stege/Halteelemente und/oder Haltenasen zur ergänzenden Fixierung und Halterung der Permanentmagnete während der Fertigung und/oder im Betrieb der dynamoelektrischen Maschine gegenüber Fliehkraftbeanspruchungen.

Jeder Pol des Rotors weist zumindest eine Ausnehmung auf. Bei mehreren Ausnehmungen pro Pol sind diese V-förmig, U-förmig oder dachförmig angeordnet. Jede Tasche einer Ausnehmung weist einen oder mehrere Permanentmagnete auf.

Den einzelnen Blechen sind nun, neben der gemeinsamen Grundausstattung, wie Wellenbohrung, Ausnehmungen, Bohrungen, gleicher Anzahl von Polen und gleicher Außendurchmesser zusätzliche spezifische Eigenschaften zur Optimierung der Einzelanforderungen zugewiesen.

Erste Bleche, die Schlitze von den Bohrungen zu den Ausnehmungen aufweisen, um im axialen Wechsel mit anderen Blechen radiale Kanäle zu bilden, können je nach Blechdicke und vorgesehenem Kleber oder Vergussmaterial ein oder mehrere Blechdicken aufweisen.

Zweite Bleche können nun auch nur die Grundausstattung aufweisen, sie können jedoch auch optional zusätzliche Halteelemente in Form von Stegen und/oder Haltenasen aufweisen, um die mechanische Stabilität des Blechpakets zu gewährleisten.

Des Weiteren können die Bleche im Bereich der Ausnehmungen, insbesondere den Taschen, partielle Ausstanzungen aufweisen, die eine Erweiterung der Tasche darstellen, und die einen Verklebevorgang und/oder Vergießen erleichtern.

Diese partiellen Ausstanzungen können den ersten Blechen oder den zweiten Blechen zugewiesen werden. Es können jedoch auch dritte Bleche vorgesehen werden, die neben der Grundausstattung diese partiellen Ausstanzungen aufweisen.

Ebenso sind vierte Bleche vorstellbar, die lediglich die Grundausstattung aufweisen.

Die Grundausstattung weist also folgende Eigenschaften auf: Wellenbohrung, Ausnehmungen, Bohrungen, gleiche Anzahl von Polen und gleicher Außendurchmesser. Die darüberhinausgehenden Eigenschaften, wie Schlitze zur Gestaltung der Zuflusskanäle, Halteelemente zur mechanischen Verstärkung und partielle Ausstanzungen, sind bei dem jeweiligen Blechen nur bei einem Pol, bei mehreren Polen oder allen Polen umgesetzt.

Falls die darüberhinausgehenden Eigenschaften, wie Schlitze zur Gestaltung der Zuflusskanäle, Halteelemente zur mechanischen Verstärkung und partielle Ausstanzungen bei nur einem oder einigen - aber nicht allen - Polen eines der Bleche vorliegen sollten, sind diese Eigenschaften im axialen Verlauf des Blechpakets dennoch allen Polen zuweisbar. Dabei wird während des Paketierens durch Verdreh- und/oder Umschlagspaketierung diese Eigenschaften gezielt den vorgesehenen Polen zugewiesen.

Verdreht oder verdreht und umgeschlagen wird dabei durch einen Winkel, der sich aus der Polzahl p des Rotors ergibt. Als Umschlagen wird dabei verstanden, dass ein Blech derart gedreht wird, dass Vorderseite und Rückseite vertauscht werden.

Ein weiterer Vorteil ist, dass durch das Verdrehen und/oder Verdrehen und Umschlagen der Rotorbleche Anisotropien aus den Materialeigenschaften der Bleche (Festigkeit und magnetische Eigenschaften sind beispielsweise abhängig von der Walzrichtung) egalisiert werden. Über die axiale Länge des Blechpakets des Rotors betrachtet führt dies zu einer Homogenisierung magnetischer Eigenschaften des gesamten Blechpakets, was zur Steigerung der Effizienz und zur Laufruhe des Rotors bei der dynamoelektrischen Maschine beiträgt.

Eine weitere Optimierung eines zweiten oder dritten Bleches sind dabei definierte partielle Ausstanzungen an den Taschen, die durch Form und Lage definierte Kapillaren bilden, die zur sicheren Fixierung der Permanentmagnete durch Verkleben/Vergießen in den Taschen beitragen. Damit erhält man eine größere Auswahl hinsichtlich der Viskosität der einsetzbaren Kleber/Vergussmassen. Diese partiellen Ausstanzungen sind abschnittsweise radiale Erweiterungen der Taschen, die im axialen Verlauf betrachtet auch mäandernd ausgeführt sein können, was sich in der jeweiligen verändernden Positionierung einer partiellen Ausstanzung in einer Tasche zeigt.

Eine weitere Optimierung der jeweiligen Bleche sind hinsichtlich mechanischer Festigkeit die Ausgestaltung der Halteelemente, der Randbegrenzungen der Flusssperren und der Stege, um die Permanentmagnete in den Taschen der Ausnehmungen zu halten. Dabei kann die Anzahl und Formgebung der Halteelemente, Stege und Randbegrenzungen je nach Anforderung angepasst werden. Dabei ist eine Drehzahlsteigerung von bis zu 50 % gegenüber herkömmlichen Rotoren möglich.

Das Blechpaket des Rotors weist also die vielfältigen Anforderungen in mechanischer, magnetischer und auch strömungstechnischer Hinsicht (für die Fließfähigkeit des Vergusses) unterschiedlichen Blechen des Blechpakets zu.

Die Grundausstattung der Bleche ist bezüglich Wellenbohrung, Ausnehmungen, Bohrungen, Anzahl von Polen und gleicher Außendurchmesser gleich.

Die Wellenbohrung, die zunächst bei jedem der Bleche vorhanden ist, kann je nach Festlegung welche Bleche und wie (Passfeder, Schrumpfsitz) das Drehmoment auf eine Welle übertragen unterschiedlich ausgeführt sein.

Die ersten Bleche weisen neben der Grundausstattung Schlitze von ihren Bohrungen zu den Ausnehmungen ihres Pols auf. Dies ist bei nur bei einem Pol, bei mehreren Polen oder allen Polen der ersten Bleche umgesetzt. Je mehr Schlitze vorhanden sind umso mehr kann jedoch der Magnetfluss beeinträchtigt werden.

Die zweiten Bleche weisen neben der Grundausstattung verstärkte Haltelemente wie Randstege, oder Haltestege auf. Die zweiten Bleche sind in mechanischer Hinsicht optimiert. Je nach Anforderungen u.a. an die zu erwartende Drehzahl des Rotors, den Durchmesser des Rotors sind diese Stege dementsprechend auszuführen. Diese Verstärkungen sind nur bei einem Pol, bei mehreren Polen oder allen Polen der zweiten Bleche umgesetzt.

Eine weitere Verbesserung der einfließenden Vergussmasse oder Klebers kann durch partielle Erweiterungen der Ausnehmungen, insbesondere der Taschen, erfolgen. Diese partiellen Erweiterungen können der ersten und oder zweiten Blechen zugewiesen sein. Ebenso ist es möglich dritte Bleche vorzusehen, die neben der Grundausstattung diese partiellen Erweiterungen aufweisen.

Ebenso sind vierte Bleche nur mit der Grundausstattung zusätzlich möglich.

Das Blechpaket kann sich somit aus folgenden Blechen in einer vorgebbaren axialen Reihenfolge zusammensetzen:
Aus ersten und zweiten Blechen jeweils optional gedreht und/oder umgeschlagen.

Aus ersten, zweiten und dritten Blechen jeweils optional gedreht und/oder umgeschlagen.

Aus ersten, zweiten, dritten Blechen jeweils optional gedreht und/oder umgeschlagen und mit vierten Blechen innerhalb der axialen Reihenfolge.

Bei den ersten Blechen wird durch die Formgebung und Dimensionierung des Schlitzes eine Bildung eines Zuflusskanales von einer Bohrung zu einer Ausnehmung vorgegeben. Bei der Dimensionierung der Schlitze sind ebenfalls die einsetzbaren Kleber und Vergussmaterialien zu beachten.

Die Zuflusskanäle erlauben ein sicheres Fixieren (z.B. Verkleben/Vergießen) der Permanentmagnete in den jeweiligen Taschen. Die Verabreichung des Klebers oder der Vergussmasse erfolgt mit oder ohne Druck.

Die im Rotor vorhandenen Ausnehmungen weisen dann im axialen Verlauf betrachtet alle Möglichkeiten der Einzeloptimierung auf. Je Drehzahlanforderungen und damit verbundenen Fliehkraftbeanspruchungen, dem vorgesehenen Vergussmaterial etc., sind dementsprechend die Bleche (erstes, zweites oder gar drittes Blech) und deren axiale Reihung als auch ggf. deren Verdrehung und/oder Umschlagung durchzuführen.

Zusätzlich oder stattdessen können die Bleche, um eine mechanische Stabilität des Blechpakets zu erhalten, die einzelnen Bleche - also erste, zweite und ggf. dritte und/oder vierte Bleche - nach vorgebbarer axialer Reihenfolge, gegebenenfalls unter Verdrehen und/oder Umschlagen zumindest zum Teil miteinander verklebt werden. Damit können gegebenenfalls Stege, die der Stabilisierung des Blechpakets dienen entfallen oder zumindest mit geringeren Dimensionen ausgeführt werden, was den magnetischen Streufluss reduziert.

Im axialen Verlauf des Blechpakets werden durch die gezielte Optimierung einzelner Ausnehmungen, insbesondere Taschen hinsichtlich einer Anforderung, die negativen Auswirkungen auf andere Anforderungen deutlich reduzieren.

Ein Paketieren der einzelnen Bleche, also erste Bleche, zweite Bleche optional dritte und vierte Bleche kann auf einer Hilfswelle erfolgen. Ebenso ist es möglich diese Bleche zu verkleben.

Ebenso ist Stanzpaketieren der Bleche möglich, um ein Blechpaket zu erhalten, in das die Permanentmagnete einsetzbar sind.

Das Blechpaket kann auch durch Stanzen im Folgeschnitt hergestellt werden.

Ein ev. zusätzliches axiales Paketieren erfolgt dann, wenn sich das Blechpaket auf der eigentlichen Welle befindet. Dabei wird das Blechpaket mittels zweier Scheiben, z.B. der Verteilscheiben, zusammengepresst.

Um nun einen Kleber oder eine Vergussmasse in das Blechpaket des Rotors über die Bohrungen einbringen zu können, ist zumindest an einer Stirnseite des Blechpakets eine Verteilscheibe vorgesehen. Diese wird, nachdem sich die Permanentmagnete in ihren Taschen befinden, angebracht, um den Kleber oder die Vergussmasse einzubringen.

Zumindest eine der beiden Scheiben ist dabei eine Verteilscheibe. Die andere Scheibe dient lediglich als Abschluss, um den Austritt des Klebers oder der Vergussmasse aus den Bohrungen, bzw. den Flusssperren zu vermeiden.

Das Blechpaket oder nur die ersten und/oder zweiten und/oder dritten Bleche und/oder die Verteilscheiben werden vorzugsweise auf die Welle geschrumpft. Ebenso sind andere Möglichkeiten vorhanden, das Drehmoment vom Blechpaket auf die Welle zu übertragen, wie Passfederverbindungen etc. Eine Paketierung des Blechpakets kann auch über Zugankerverbindungen erfolgen.

Die Verteilscheibe weist auf der dem Blechpaket des Rotors zugewandten Seite zumindest einen umlaufenden, zum Blechpaket hin, offenen Ringkanal auf, um den Kleber oder die Vergussmasse über die Bohrungen und die jeweiligen Zuflusskanäle der jeweiligen Ausnehmung zukommen zu lassen.

Auf der dem Blechpaket abgewandten Seite der Verteilscheibe ist zumindest eine Injektionsöffnung, also eine Zuführung vorgesehen, um den Ringkanal zu speisen. Optional weist der Ringkanal im Bereich einer Bohrung und/oder einer Flusssperre eines Pols des Rotors Erweiterungen auf, um ausreichend Vergussmasse für den jeweiligen Pol bzw. Ausnehmungen bereitstellen zu können.

Der Ringkanal und optional dessen Erweiterung schließen mit der Stirnseite des Blechpakets formschlüssig und dicht ab, um einen dementsprechenden Druck und damit gegebenenfalls die erforderlichen Scherkräfte für das jeweilige Vergussmaterial aufbauen zu können.

Bei einem möglichen Verfahren zum Vergießen des Blechpakets des Rotors weist die Vergussmasse thixotropisches Verhalten auf, wobei die Viskosität infolge eines äußeren Einflusses (z.B. Druck) abnimmt und nach beendigter Beanspruchung wieder in die Ausgangsviskosität zurückkehrt.

Es sind aber auch andere handelsübliche Vergussmassen oder Kleber in den erfindungsgemäßen Blechpaketen einsetzbar.

Bei konstanter Scherung (Druck) nimmt mit der Zeit die Viskosität der Vergussmasse ab, nach Beendigung der Scherbelastung steigt die Viskosität dieser Vergussmasse zeitabhängig wieder an.

Eine Thixotropierung der Vergussmasse wird u.a. durch Zugabe und Dispergieren von pyrogener Kieselsäure Aerosil im Bereich zwischen 0,1-0,5 Vol.-% erreicht.

Bevor die Vergussmasse über eine Leitung oder einen Schlauch dem Rotor über die Verteilscheibe zugeführt wird, werden deren Bestandteile von mindestens zwei getrennt vorliegenden Komponenten durch Relativbewegung so umpositioniert, dass eine gleichmäßige und klar definierte Verteilung der zu mischenden Komponenten vorliegt.

Das Basisharzmaterial der Vergussmasse entspricht hierbei einem zweikomponentigen Reaktivharz auf Basis von Epoxy/Amin oder z.B. Polyurethan/Isocyanat. Eine Gelierung bei Raumtemperatur ist hierbei nach wenigen Minuten bis einigen Stunden einstellbar, so dass ohne zusätzliche Erwärmung (und damit einhergehender weiterer Verflüssigung des Harzgemisches) eine weitgehende Verfestigung der Masse eintritt.

Es stellt sich damit bei geringen Scherkräften (ca. 10 Pa) eine Scherviskosität von ca. 10^5-10^7 mPas ein. Bei erhöhten Scherkräften (ca. 200 Pa) tritt eine Scherviskosität von ca. 10^2-10^4 mPas ein. Diese Scherkräfte werden durch Druck in die Vergussmasse eingeleitet.

Eine Erholung des Materials, respektive der Viskosität, ergibt sich nach Abnahme der Scherkräfte (Abnahme des Druckes) innerhalb weniger Minuten, so dass es zu einer Selbstverfestigung der Vergussmasse kommt und keine Fließwege durch dünne Spalte, insbesondere zwischen den Einzelblechen des Blechpakets des Rotors mehr entstehen.

Der Volumenschrumpf eines derartig gefüllten Rotors liegt bei unter 1%.

Die vorzugsweise raumtemperaturhärtende Vergussmasse kann, neben einem stark thixotropierten rheologischen Verhalten, durch geeignete Additive zum einen wärmeleitfähig (>0,5 W/mK) eingestellt werden. Diese Additive werden vor der Zuführung in den Rotor, insbesondere der Verteilscheibe der Vergussmasse, beigemischt. Dies führt im Betrieb der dynamoelektrischen Maschine zu einer verbesserten Wärmeabfuhr aus den Permanentmagneten, da diese durch Wirbelströme und/oder Luftspaltharmonischen aufgeheizt werden. Damit sind die Permanentmagnete mit vergleichsweise verbesserter Wärmeleitfähigkeit an das Blechpaket des Rotors gekoppelt.

Die Wärmeleitfähigkeit der Vergussmasse oder des Klebers kann durch Zugabe oder Zumischen verschiedener Füllstoffe erreicht werden. Die dabei vorgesehenen Additive sind Quarzmehl, Quarzgut, Alox, Kreide. Die einzelnen Komponenten sind zusammen oder auch einzeln den Füllstoffen (Vergussmasse, Kleber) beimischbar und können somit bis zu 40 Vol.% der gesamten Vergussmasse bzw. Klebers ausmachen.

Vorteilhafterweise erfolgt die Bestückung des Rotors mit Vergussmasse als aufsteigender Verguss bei erhöhtem Vergussdruck. Dabei ist die Achse des Rotors um einen vorgegebenen Winkel gegenüber der Horizontalen ausgerichtet, vorzugsweise 90°.

Ebenso verhält es sich mit weiteren Klebermaterialien.

Durch die aufsteigende Füllmasse ist eine blasenfreie Applikation gewährleistet.

Zur Mischung wird ein statisches/dynamisches Mischrohr verwendet, um das Reaktivgemisch in situ zu mischen und direkt im Anschluss über die Verteilscheibe auf einer Stirnseite des Rotors über die Bohrungen in den Rotor, insbesondere das Blechpaket zu applizieren.

Es können auch auf beiden Stirnseiten des Rotors Verteilscheiben vorgesehen sein, um eine Bestückung des Rotors von beiden Seiten vorzunehmen. Dabei sind die Verteilscheiben entweder identisch oder derart ausgebildet, dass jede Verteilscheibe lediglich die Hälfte der Pole des Rotors mit Vergussmasse versieht. Eine beidseitige Beschickung mit Vergussmasse kann vor allem bei axial langen Rotoren von Vorteil sein.

Über einen oder mehrere geeignete Injektionsanschlüsse an der Verteilerscheibe können Drücke von bis zu 10 bar, vorzugsweise 4,5 bar, appliziert werden, wodurch die frisch gemischte, thixotropierte Vergussmasse fließfähig wird und axial, insbesondere axial aufsteigend, in die verbleibenden geometrischen Zwischenräume des Rotors gelangt.

Als Zwischenräume sind dabei die Flusssperren, die Spalte zwischen den Permanentmagneten und den jeweiligen Blechen in den Taschen, optional Zuführkanäle aber nicht oder fast nicht die Bereiche zwischen den Einzelblechen gemeint.

Nach der vollständigen Befüllung der Ausnehmungen wird der Druck abgelassen. Eine Detektion, dass das Blechpaket mit den entscheidenden Zwischenräumen "voll" ist, erfolgt über den statischen im Vergleich zu dem dynamischen Druck (Detektion z.B. über Druckaufbau dynamischer vs. statischer Druck).

Ebenso ist eine optische Kontrolle möglich.

Die Vergussmasse im Rotor geliert danach drucklos bei Raumtemperatur und härtet innerhalb von 24 Stunden vollständig aus.

Eine Weiterarbeit an und mit dem Rotor ohne mechanische Belastung ist schon nach ca. 1 Stunde möglich. Ein Durchdringen des Materials, also der Vergussmasse durch die Einzelbleche ist durch die Thixotropierung der Vergussmasse verhindert, so dass auf einen vorangehenden Lackierprozess der außenliegenden Mantelfläche verzichtet werden kann.

Eine geeignete Verteilscheibe, welche im Vergussprozess zumindest an einer Stirnseite des Blechpakets des Rotors mit vorgesehen wird, verbindet über eine oder mehrere Zuführungen an der Verteilscheibe, einen Ringkanal mit allen vorgesehenen Erweiterungen über die Bohrungen, um durch eine einzige Injektion mit einem Füllvorgang den Rotor zu "befüllen".

Die Verteilscheibe erfüllt somit mehrere Funktionen. Zum einen Paketieren des Blechpakets auf der Welle, Verteilung der Vergussmasse bzw. Klebers und optionale Möglichkeiten den Rotor zu wuchten. Dabei wird über Materialentnahme an der Verteilscheibe oder zusätzlich anbringbare Wuchtgewichte an der Verteilscheibe die Wuchtung des Rotors durchgeführt.

Diese Verteilscheibe wird somit stirnseitig und formschlüssig vorab an das Blechpaket angebracht und kann im Nachgang der Vergießprozesses auch zur Wuchtung des Rotors genutzt werden.

Um die Wuchtung nachhaltig durchzuführen muss die Verteilscheibe am Blechpaket des Rotors verbleiben.

In einer Ausführung wird nunmehr der Rotor mit seinen Permanentmagneten mit einer thixotropierenden Vergussmasse vergossen, welche bei Raumtemperatur geliert und vollständig härtet.

Durch die hohe Füllung und Nutzung von Thixotropieradditiven können mittels eines Druckverfahrens die Taschen bzw. die Ausnehmungen aufsteigend gefüllt werden, ohne dass jedoch die Reaktivmasse durch kleine Schlitze, wie z.B. zwischen den Einzelblechen, entweichen kann.

Eine mit einem derartigen Rotor ausgestattete Synchronmaschine weist einen hohe Effizienzklasse auf (mindestens IE5) und ist somit für einen Antrieb, vor allem für den Dauerbetrieb von Kompressoren, Verdichtern, Förderbändern etc., geeignet.

Die Erfindung sowie weitere Ausgestaltungen der Erfindung werden anhand prinzipiell dargestellter Ausführungsbeispiele näher erläutert darin zeigen:
- FIG 1: einen prinzipiellen Längsschnitt einer dynamoelektrischen Maschine,
- FIG 2: einen Längsschnitt durch einen erfindungsgemäßen Rotor,
- FIG 3: eine Verteilscheibe,
- FIG 4, 5: ein erstes Blech eines Rotors,
- FIG 6, 7: ein zweites Blech eines Rotors
- FIG 8, 9: weitere erste Bleche eines Rotors
- FIG 10: eine perspektivische Teilansicht einer Ausnehmung eines Pols des Rotors,
- FIG 11: eine perspektivische Teilansicht einer Ausnehmung eines Pols des Rotors,
- FIG 12: eine Teilansicht eines Querschnitts einer dynamoelektrischen Maschine,
- FIG 13 bis 23: Ausgestaltungen von Polen bzw. Blechen des Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

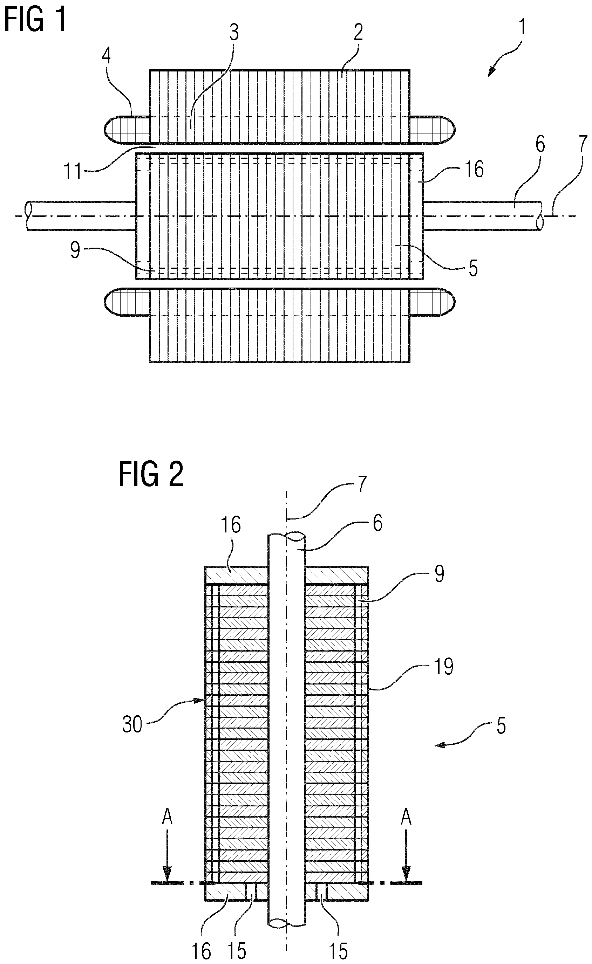

FIG 1 zeigt in einer prinzipiellen Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem 3 aufweist, das an den Stirnseiten des Stators 2 einen Wickelkopf 4 ausbildet. Durch elektromagnetische Wechselwirkung über einen Luftspalt 11 wird durch ein bestromtes Wicklungssystem 3 ein Rotor 5 in Rotation um eine Achse 7 versetzt. Der Rotor 5, der koaxial zum Stator 2 angeordnet ist, weist in axial verlaufenden Ausnehmungen eines Blechpakets 30 angeordnete Permanentmagnete 9 auf, die auch als vergrabene Permanentmagnete 9 bezeichnet werden. Die Bleche 8x des Rotors 5 sind paketiert und mit einer Welle 6 zumindest abschnittsweise drehfest verbunden.

FIG 2 zeigt einen Rotor 5, dessen Blechpaket 30 durch zwei Endscheiben paketiert ist, wobei zumindest eine Endscheibe als Verteilscheibe 16 ausgeführt ist. Diese Verteilscheibe 16 weist auf der einer Stirnseite des Blechpakets 30 zugewandten Seite zumindest einen Ringkanal 18 auf, der über eine Zuführung 15 füllbar bzw. speisbar ist. Über diese Zuführung 15 wird nunmehr der Ringkanal 18 und gegebenenfalls weitere Erweiterungen 17 mit einem Vergussmaterial, insbesondere einem thixotropischen Material oder einem Kleber, unter Druck beaufschlagt.

Die Verteilscheibe 16 kann auch mehrere Zuführungen 15 aufweisen, um die zuführbare Menge an Vergussmaterial zu steigern.

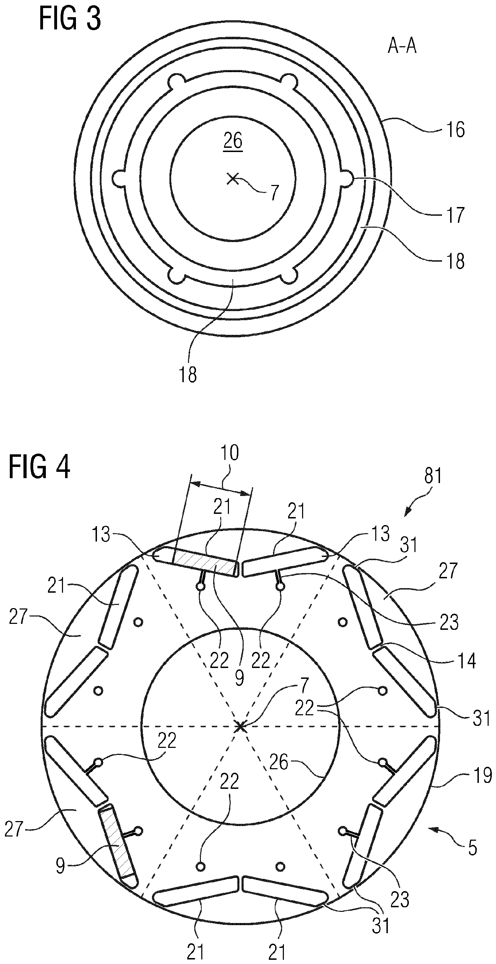

Ausnehmungen 21 im Blechpaket 30, wie auch ab den FIG 4 gezeigt, sind dabei Ausstanzungen der einzelnen Bleche 8x, die paketiert, axial hintereinander angeordnet sind. Die Ausnehmungen 21 weisen sowohl Taschen 10 als auch die Flusssperren 13 auf. Die Taschen 10 sind zur Aufnahme der oder des Permanentmagneten 9 vorgesehen. In den Raum der Ausnehmungen 21 ragen optional Haltestege 28 und/oder Haltenasen 24 zur ergänzenden Fixierung und Halterung der Permanentmagnete 9 während der Fertigung um auch im Betrieb der dynamoelektrischen Maschine 1 Fliehkraftbeanspruchungen aufzunehmen.

Idealerweise sind die Permanentmagnete 9 ohne Spalte zu den Blechen 8 in den Ausnehmungen 21 platziert - bilden also eine lückenlose und vollflächige Anlage. Eine derartige komplementäre Anordnung ist aber aus fertigungstechnischen Gründen nicht möglich. Es entstehen fertigungsbedingt Spalte 12 zwischen den Permanentmagneten 9 und den Blechen 8x, die geschlossen werden müssen.

Mit den Blechen 8x sind stellvertretend grundsätzlich Bleche des Blechpakets 30 gemeint. Also auch die ersten Bleche 81, die zweiten Bleche 82, die dritten Bleche 83 und die vierten Bleche 84. Je nach axialer Zusammensetzung des Blechpakets 30 sind damit Bleche 81, und 82 oder optional die weiteren Bleche 83, 84 mit im Blechpaket 30 enthalten.

Ein Paketieren der Bleche 8x kann auf einer Hilfswelle erfolgen. Ebenso ist es möglich die Bleche 8x zu verkleben. Ebenso ist Stanzpaketieren der Bleche 8x möglich, um ein Blechpaket 30 des Rotors 5 zu erhalten, in das die Permanentmagnete 9 einsetzbar sind.

Zusätzliches Paketieren erfolgt dann, wenn sich das Blechpaket 30 auf der eigentlichen Welle 6 befindet. Dabei wird das Blechpaket 30 mittels zweier Scheiben, insbesondere zumindest einer Verteilscheibe 1,6 z.B. axial über Zuganker, zusammengepresst.

Das Blechpaket 30 und/oder die Verteilscheiben 16 werden vorzugsweise auf die Welle 6 geschrumpft. Ebenso sind andere Möglichkeiten vorhanden, das Drehmoment vom Blechpaket 30 auf die Welle 6 zu übertragen, wie Passfederverbindungen etc.

FIG 3 zeigt einen Schnitt durch die Verteilscheibe 16 bei der ein umlaufender, offener Ringkanal 18 vorgesehen ist und der als optionale Ausbildung Erweiterungen 17 aufweist, die jeweils die Bohrungen 22 eines Pols 27 des Rotors 5 abdecken.

Angedeutet ist dabei die Erweiterung 17, die optional von der Verteilerscheibe 16 und dem Ringkanal 16 in den Pol 27 des Rotors 5 mündet.

Die Verteilscheibe 16 weist auf der dem Blechpaket 30 des Rotors 5 zugewandten Seite zumindest einen umlaufenden zum Blechpaket 30 hin offenen Ringkanal 18 auf, der auf Höhe der Bohrungen 22 verläuft. Der Ringkanal 18 schließt formschlüssig und dicht mit der Stirnseite des Blechpakets 30 ab. Im Bereich der Bohrungen 22, die im Blechpaket 30 axial verlaufende Kanäle bilden, weist der Ringkanal 18 optional Erweiterungen 17 auf. Damit lassen sich u.a. Verteilscheiben 16 gleichen Typs bei unterschiedlichen Blechschnitten des Rotors 5 verwenden.

Auf der dem Blechpaket 30 abgewandten Seite der Verteilscheibe 16 ist zumindest eine Injektionsöffnung, also eine Zuführung 15 vorgesehen, um den Ringkanal 18 zu speisen. Über den Ringkanal 18 werden die Bohrungen 22 mit einer Vergussmasse oder Kleber gespeist.

Optional weist die Verteilscheibe einen weiteren dazu konzentrischen Ringkanal 18 auf, der über die Flusssperre 13 der Ausnehmungen 21 zusätzlich Vergussmasse 20 bereitstellen kann. Der optionale Ringkanal kann eine eigene Zuführung aufweisen oder über die bereits vorhandene Zuführung gespeist werden. Dazu ist dann eine radiale Ausformung von der zentralen Zuführung zum äußeren Ringkanal notwendig.

Der Ringkanal 18 und optional dessen Erweiterung 17 schließen mit der Stirnseite des Blechpakets 30 formschlüssig und dicht ab, um einen dementsprechenden Druck der Vergussmasse oder des Klebers und damit die erforderlichen Scherkräfte aufbauen zu können, die für eine Befüllung und der Überwachung des Vorganges nützlich sind.

Über die Zuführung 15 wird nunmehr die vorab, insbesondere in situ, gemischte Vergussmasse in das Blechpaket des Rotors 5 mit vorgebbarem Druck gedrückt.

Bei dieser als thixotropisches Material ausgeführte Vergussmasse stellt sich aufgrund der erhöhten Scherkräfte eine vergleichsweise geringe Viskosität ein, die der Vergussmasse 20 ermöglicht in die Spalte 12 und Ausnehmungen 21 des Blechpakets 30 einzudringen, die von Permanentmagneten 9 nicht eingenommen werden. Bei dem Vergussprozess wird nunmehr die Vergussmasse 20 unter vorgebbarem Druck reingepresst und aufgrund der geringeren Viskosität verteilt sich diese in den Flusssperren 13 bzw. Spalten 12 zwischen Permanentmagneten 9 im Blechpaket 30. Eine Überwachung des Drucks kann den Vorgang beenden, so dass die Vergussmasse 20 in dem Moment, wenn die Scherkräfte reduziert werden (Druckreduktion), eine Viskositätssteigerung erfährt und somit der Vorgang des Vergießens abgebrochen wird bzw. werden kann. Sobald sich die Vergussmasse 20 in den Spalten 12 und Flusssperren 13 um den Permanentmagneten 9 verteilt hat und eine weitere Ausdehnung in die Zwischenräume der Bleche 8x ansteht, steigert sich der erforderliche Druck, der dann als Abbruchkriterium des Vergießens angezogen werden kann. Damit wird vermieden, dass die Vergussmasse 20 beispielsweise radial zwischen die Bleche 8x des Rotors 5 dringt und insbesondere an die Oberfläche 19 des Rotors 5 tritt.

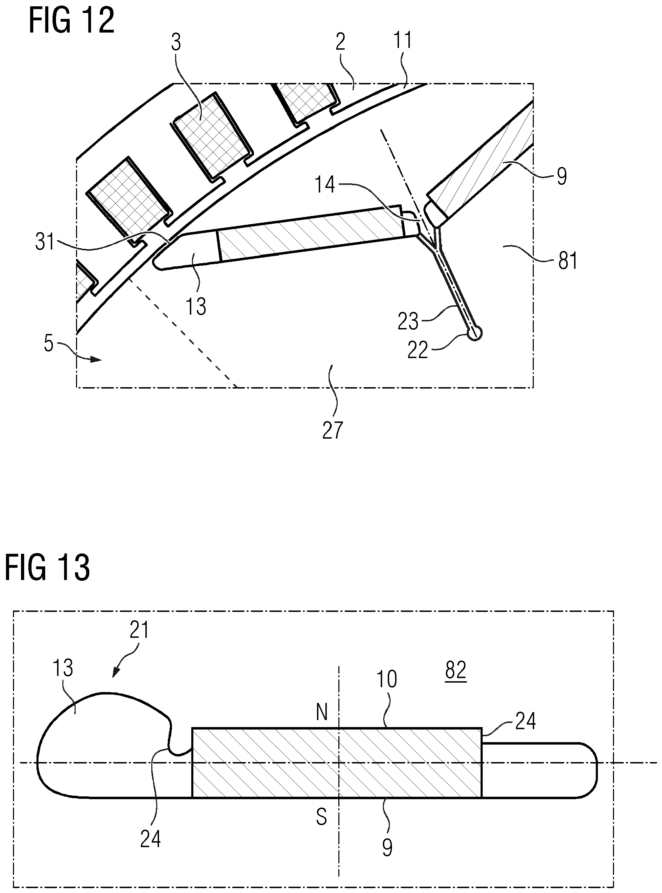

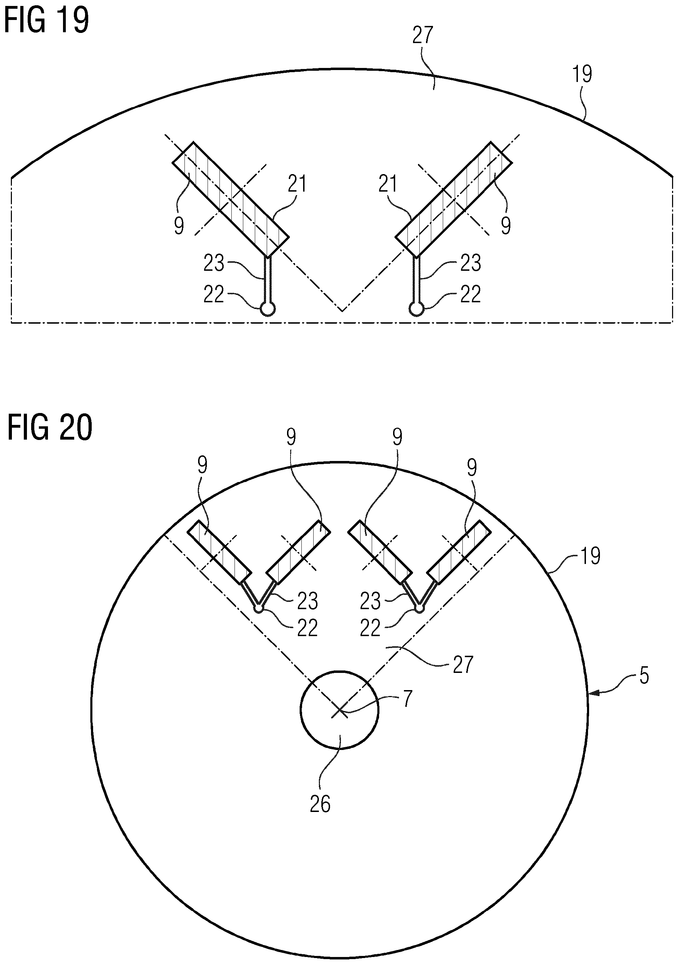

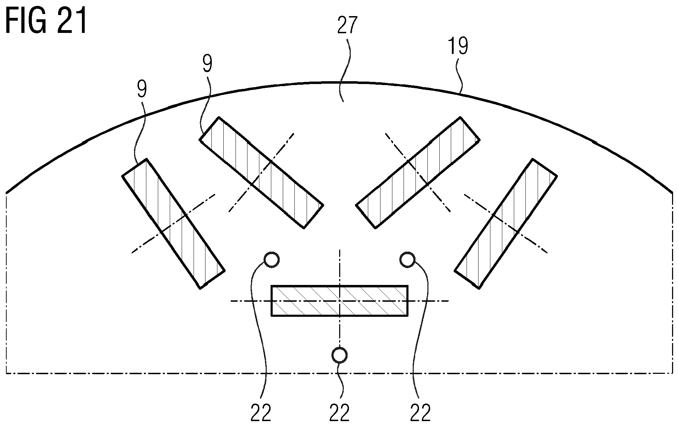

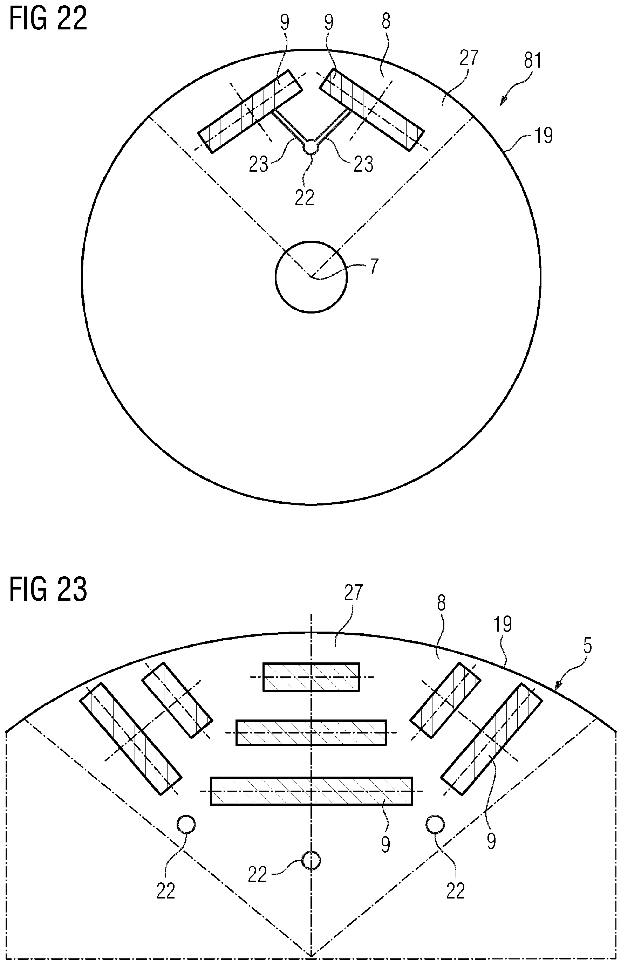

FIG 4 zeigt ein erstes Blech 81 das Pole 27 bildet, die jeweils einen Polsektor 29 des Bleches 81 des Rotors 5 einnehmen. In dieser Ausführung ist der Pol 27, durch zwei V-förmig angeordnete Permanentmagnete 9 gebildet. Die Pole 27 des Rotors 5 können ebenso aus mehreren Permanentmagneten 9 gebildet sein, beispielsweise aus Doppel-V-förmigen Anordnungen, aus U-förmigen Anordnungen oder W-förmigen Anordnungen oder auch nur aus tangential angeordneten Permanentmagneten 9, wie den FIG 13 bis 23 beispielhaft zu entnehmen ist. Auch in axialer Richtung sind je nach axialer Länge des Rotors 5 mehrere Permanentmagnete 9 pro Ausnehmung 21 einer oder mehrere Permanentmagnete 9 vorgesehen.

Diese ersten Bleche 81 weisen neben der Grundausstattung Schlitze 32 auf, die im Blechpaket 30 Zuflusskanäle 23 zu den jeweils zugeordneten Ausnehmungen 21 bilden.

Grundsätzlich ist zu den Blechen 8x folgendes zu bemerken:
Die Grundausstattung eines Bleches 81, 82, und sofern verwendet, 83, weist folgende Eigenschaften auf: Wellenbohrung, Ausnehmungen 21, Bohrungen 22, gleiche Anzahl von Polen 27 und gleicher Außendurchmesser.

Die darüberhinausgehenden Eigenschaften, wie Schlitze 32 zur Gestaltung der Zuflusskanäle 23 in die Ausnehmungen 21, Halteelemente 24 zur mechanischen Verstärkung und partielle Ausstanzungen 25, sind bei den jeweiligen Blechen 81, 82, 83 nur bei einem Pol 27, bei mehreren Polen 27 oder allen Polen 27 umgesetzt.

Das vierte Blech 84 weist lediglich die Grundausstattung auf.

Falls die darüberhinausgehenden Eigenschaften, wie Schlitze 32 zur Gestaltung der Zuflusskanäle 23, Halteelemente 24 zur mechanischen Verstärkung und partielle Ausstanzungen 25 bei nur einem oder einigen - aber nicht allen - Polen 27 eines der Bleche 81, 82, 83 vorliegen sollten, sind diese Eigenschaften im axialen Verlauf des Blechpakets 30 allen Polen 27 zuweisbar. Dabei wird während des Paketierens des Blechpakets 30 durch Verdreh- und/oder Umschlagspaketierung des einzelnen Bleches 81, und/oder 82 und/oder 83 die angestrebte Eigenschaft gezielt den vorgesehenen Polen 27 bzw. Polsektoren 29 zugewiesen.

Verdreht oder verdreht und umgeschlagen wird dabei durch einen Winkel, der sich aus der Polzahl p des Rotors 5 ergibt und der dem Polsektor 29 entspricht.

Ein weiterer Vorteil ist, dass durch das Verdrehen der Bleche 8x Anisotropien aus den Materialeigenschaften des Bleches (Festigkeit und magnetische Eigenschaften sind beispielsweise abhängig von der Walzrichtung bei der Herstellung der Bleche) egalisiert werden. Über die axiale Länge des Blechpakets 30 des Rotors 5 betrachtet, führt dies zu einer Homogenisierung der magnetischen Eigenschaften des gesamten Blechpakets 30, was zur Steigerung der Effizienz und zur Laufruhe der dynamoelektrischen Maschine 1 beiträgt.

Die einzelnen Optimierungen des jeweiligen Bleches 81, 83 sind dabei definierte partielle Ausstanzungen 25 an den Taschen 10, die durch Form und Lage definierte Kapillaren bilden, die zur sicheren Fixierung der Permanentmagnete 9 durch Verkleben/Vergießen in den Taschen 10 beitragen. Dies gestattet beim Herstellungsprozess des Rotors 5 eine größere Auswahl hinsichtlich der Viskosität der einsetzbaren Kleber/Vergussmassen.

Eine verbesserte Verteilung wird durch mäandernden Verlauf dieser Kapillaren über die axiale Länge einer Tasche 10 erreicht.

Weitere Optimierungen der jeweiligen Bleche 82 sind hinsichtlich mechanischer Festigkeit die Ausgestaltung der Halteelemente 24, die Randbegrenzungen 31 der Flusssperren 13 und der Stege 14, um die Permanentmagnete 9 in den Taschen 10 der Ausnehmungen 21 zu halten. Dabei kann die Anzahl und Formgebung der Halteelemente 24, Stege 14 und Randbegrenzungen 31 je nach Anforderung, z.B. Drehzahl der permanenterregten Synchronmaschine, angepasst werden.

Bei den ersten Blechen 81 wird durch die Formgebung und Dimensionierung des Schlitzes 32 die Bildung eines Zuflusskanales 23 von einer Bohrung 22 zu einer Ausnehmung 21 vorgegeben. Bei der Dimensionierung der Schlitze 32 sind ebenfalls die einsetzbaren Kleber und Vergussmaterialien zu beachten.

Die Zuflusskanäle 23 erlauben ein sicheres Fixieren (z.B. Verkleben/Vergießen) der Permanentmagnete 9 in den jeweiligen Taschen 10. Die Verabreichung des Klebers oder der Vergussmasse 20 erfolgt mit oder ohne Druck.

Die im Rotor 5 vorhandenen Ausnehmungen 21 weisen dann im axialen Verlauf betrachtet alle Möglichkeiten der Einzeloptimierung auf. Je nach Drehzahlanforderungen und damit verbundenen Fliehkraftbeanspruchungen, dem vorgesehenen Vergussmaterial etc. sind dementsprechend die Bleche 8x also erstes Blech 81, zweites Blech 82 oder gar drittes Blech 83 und deren axiale Reihung als auch ggf. deren Verdrehung oder deren Verdrehung und Umschlagung durchzuführen.

Zusätzlich oder stattdessen können die Bleche 8x, um eine mechanische Stabilität des Blechpakets 30 zu erhalten, die einzelnen Bleche - also erste 81, zweite 82 und ggf. dritte und vierte Bleche 83, 84 - nach vorgebbarer axialer Reihenfolge, ggf. unter Verdrehen und/oder Umschlagen zumindest zum Teil miteinander verklebt werden. Damit können ggf. Stege 14, die der Stabilisierung des Blechpakets 30 dienen, entfallen oder zumindest mit geringeren Dimensionen ausgeführt werden, was den magnetischen Streufluss reduziert.

Im axialen Verlauf des Blechpakets 30 werden durch die gezielte Optimierung einzelner Ausnehmungen 21, insbesondere Taschen 10 hinsichtlich einer Anforderung, die negativen Auswirkungen auf andere Anforderungen deutlich reduziert.

Mit anderen Worten, jedes Blech 81, 82, 83 hat seine spezielle Optimierung jeder Ausnehmung 21 oder zumindest einiger Ausnehmungen 21, so dass beispielsweise nur ein Polsektor 29 oder jeder zweite Polsektor 29 die Optimierung aufweist. Durch Verdrehung oder deren Verdrehung und Umschlagung der jeweiligen Bleche 8x durch vorgebbare, axiale Reihung während der Paketierung des Blechpakets 30 wird ein Rotor 5 geschaffen, der auf die jeweiligen Herausforderungen im Einsatz der dynamoelektrischen Maschine 1, z.B. hinsichtlich Effizienz oder Drehzahl angepasst werden kann.

Die Permanentmagneten 9 sind in Ausnehmungen 21 angeordnet, wobei eine Ausnehmung 21 sich aus Flusssperren 13, aus gegebenenfalls optionalen Halteelementen, wie Stege 14 und aus Taschen 10 zusammensetzt. Die Taschen 10 sind dabei für die Aufnahme der Permanentmagnete 9 vorgesehen, die Flusssperren 13 und gegebenenfalls Halteelemente 24 dienen lediglich der Fixierung bzw. der Optimierung des magnetischen Flusses im Blechpaket 30 des Rotors 5.

Die Vergussmasse 20 wird axial über den Ringkanal 18, die Bohrungen 22 und die Zuflusskanäle 23 in die Ausnehmungen 21 oder Taschen 10 des oder der jeweiligen Pole 27 eingegeben oder gedrückt. Optional wird die Vergussmasse 20 zusätzlich auch axial über die Flusssperren 13 und den zweiten Ringkanal reingedrückt. Dabei sucht sich die Vergussmasse 20 den weiteren Weg zwischen den Permanentmagneten 9 und den Blechen 8x, um auch in die radial außen liegenden Flusssperren 13 eindringt und diese ebenfalls zu füllen. Durch Überwachung des Drucks und damit der Scherkräfte kann der Vorgang, sobald die "Ausnehmungen 21 voll sind", abgebrochen werden. Dabei wird vermieden, dass insbesondere über die schmalen Stege 14 die Vergussmasse 20 an die Oberfläche 19 des Rotors 5 tritt.

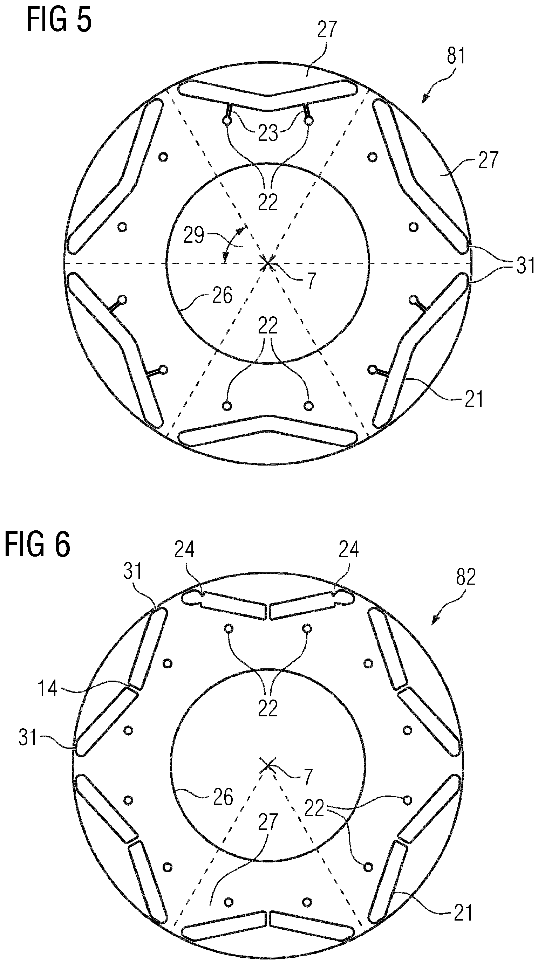

FIG 5 zeigt des Weiteren ein Blech 81 eines Rotors 5 mit sechs Polen 27, wobei insgesamt drei Pole 27 noch Schlitze 32 aufweisen, um paketiert Zuflusskanäle 23 zu den Ausnehmungen 21, insbesondere zu den Taschen 10, zu bilden. Der axiale Aufbau des Rotors 5 erfolgt in dieser Ausführung nunmehr so, dass je zwei Bleche nach FIG 5 nach einer gewissen axialen Abfolge mit anderen Blechen, z.B. 82 oder 83 gemeinsam um einen Polsektor 29 verdreht werden und so jedem Pol 27 nach einer vorgegebenen Anzahl von Blechen 8x einen Zuflusskanal 23 zu seinen Ausnehmungen 21 schaffen.

Nach einer vorgebbaren Anzahl von Blechen 8x, in diesem Fall sind es beispielsweise die ersten Bleche 81 in der axialen Reihung im Blechpaket 30 an Nr. 11/12 und würden demnach nach den Blechen Nr. 23/24 und Nr. 35/36 jeweils wieder einen Zuflusskanal 23 in den jeweils zugeordneten Pol 27 bilden.

Eine, insbesondere mechanische, Halterung der Permanentmagnete 9 durch die Haltelemente 24 erfolgt nunmehr vorzugsweise durch die Bleche 82.

FIG 6 zeigt eine Ausführung eines zweiten Bleches 82. Dieses Blech 82 ist bzgl. seiner mechanischen Anforderungen innerhalb des Blechpakets 30 optimiert. Mit anderen Worten, die Aufgabe des Bleches 82 besteht in erster Linie darin, das Blechpaket 30 auch bei hohen Drehzahlen ausreichend zu stabilisieren. Dies gelingt beispielsweise durch Stege 14 zwischen den Ausnehmungen 21 eines Pols 27 und/oder verstärkte Randbegrenzungen 31 und/oder axial dickere Blechstärken und/der Halteelemente 24 in den Ausnehmungen 21.

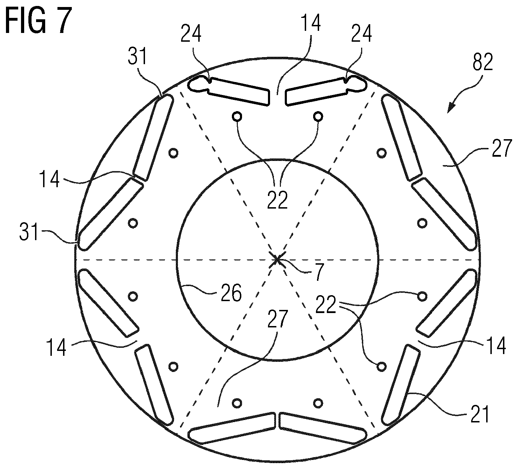

FIG 7 zeigt eine weitere Ausführung eines zweiten Bleches 82, in dem zumindest, in Umfangsrichtung betrachtet, jeder zweite Pol 27 verstärkte Stege 14 zwischen seinen Ausnehmungen 21 aufweist.

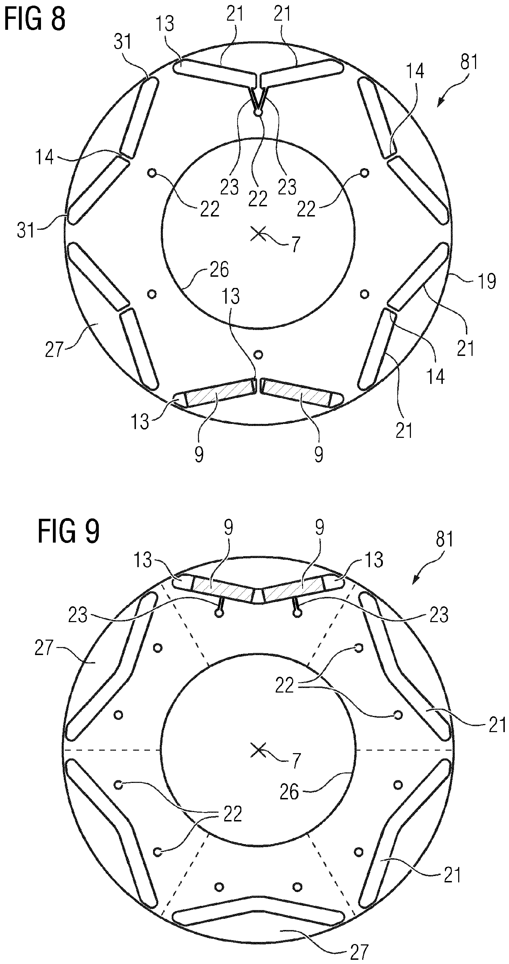

FIG 8 zeigt ein erstes Blech 81 mit einer Bohrung 22, wobei ausgehend von der einen Bohrung 22 zwei Zuflusskanäle 23 den Ausnehmungen 21 dieses Pols 27 zugewiesen sind. Somit hat nicht jede Ausnehmung 21 einen eigenen Zuflusskanal 23, sondern ein axial verlaufender Kanal 22 versorgt zwei Zuflusskanäle 23, die jeweils in die einander zuweisenden Flusssperren 13 eines Pols 27 münden, umso den magnetischen Fluss am wenigstens zu beeinflussen. Die Stege 14 sind bei dem Blech 81 optional.

FIG 9 zeigt ein weiteres erstes Blech 81, das keine Stege 14 zwischen den Ausnehmungen 21 eines Pols 21 aufweist, um so Streuflüsse weiter zu reduzieren.

Diese Ausführungen sind auch bei anderen ersten Blechen 81 nach FIG 4 oder FIG 5 möglich.

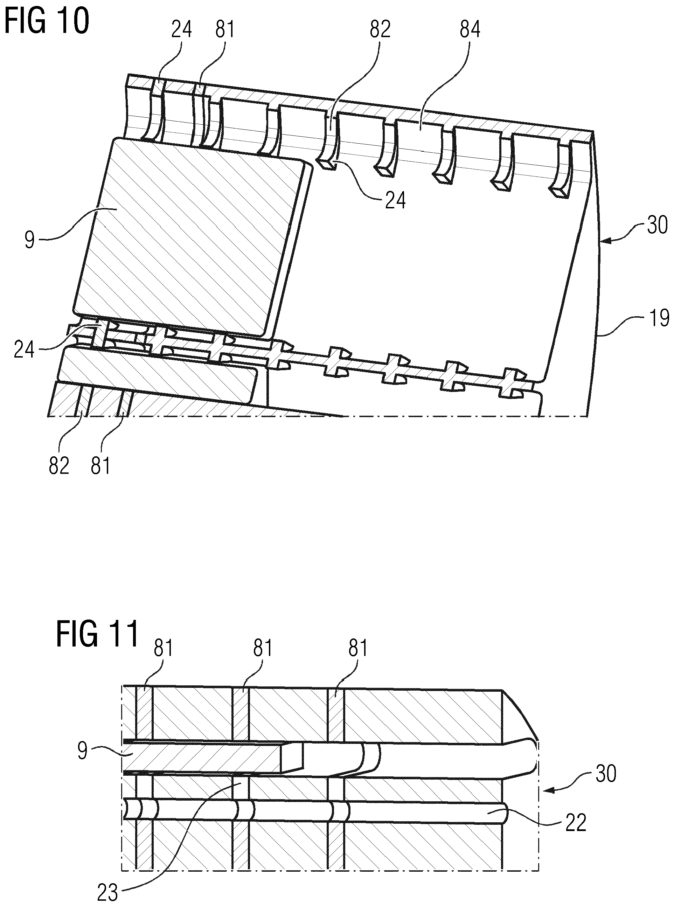

FIG 10 zeigt in einer perspektivischen Darstellung einen Ausschnitt eines Pols 27 von der Achse 7 aus betrachtet. Der Permanentmagnet 9 weist eine vorgebbare axiale Länge auf, so dass sich in einer Ausnehmung 21 mehrere derartig Permanentmagnete 9 befinden. Des Weiteren zeigt diese Darstellung Bleche 82 mit ihren Haltelemente 24, die der Fixierung der Permanentmagnete 9 dienen. Die Halteelemente 24 können innerhalb der Ausnehmung 21 umlaufend angeordnet sein, vorzugsweise sind diese Haltelemente als punktuell vorgesehene Haltenasen oder Stege ausgeführt.

In diesem Blechpaket 30 nach FIG 10 liegt nunmehr eine prinzipiell dargestellte axiale Abfolge von Blechen 81, 82 und Blechen 84 vor, wobei die Bleche 84 nur die Grundausstattung aufweisen.

FIG 11 zeigt in einer perspektivische Darstellung einen Schnitt durch ein derartiges Blechpaket 30, wobei in einer Ausnehmung 21 ein Permanentmagnet 9 dargestellt ist, der sich axial über einen Abstand von mindestens zwei Zuflusskanäle 23 erstreckt. Die Zuflusskanäle 23 werden durch ein, zwei oder mehrere axiale direkt hintereinander angeordnete Bleche 81 mit Schlitzen 32 bei einem oder mehreren Polsektoren 29 geschaffen.

FIG 12 zeigt einen Ausschnitt der dynamoelektrischen Maschine 1, mit einem Wicklungssystem 3, das bei Bestromung ein Magnetfeld erzeugt, das durch elektromagnetische Wechselwirkung mit dem mit Permanentmagneten 9 versetzten Rotor 5 ein Drehmoment erzeugt. Dem Pol 27, der durch zwei V-förmig angeordnete Permanentmagnete 9 in ihren Ausnehmungen 21 gebildet ist, wird die Vergussmasse 20 oder Kleber über die Bohrung 22 und den Zuflusskanal 23 und die Flusssperren 13 zugewiesen.

Die Figuren 13 bis 17 zeigen Ausnehmungen 21 mit ihren Permanentmagneten 9.

Dabei zeigt FIG 13 eine Ausnehmung 21 eines Pols 27 einer Ausführung eines möglichen zweiten Blechs 82, das als zusätzliches Merkmal über die Grundausstattung hinausgehend das Halteelement 24 aufweist.

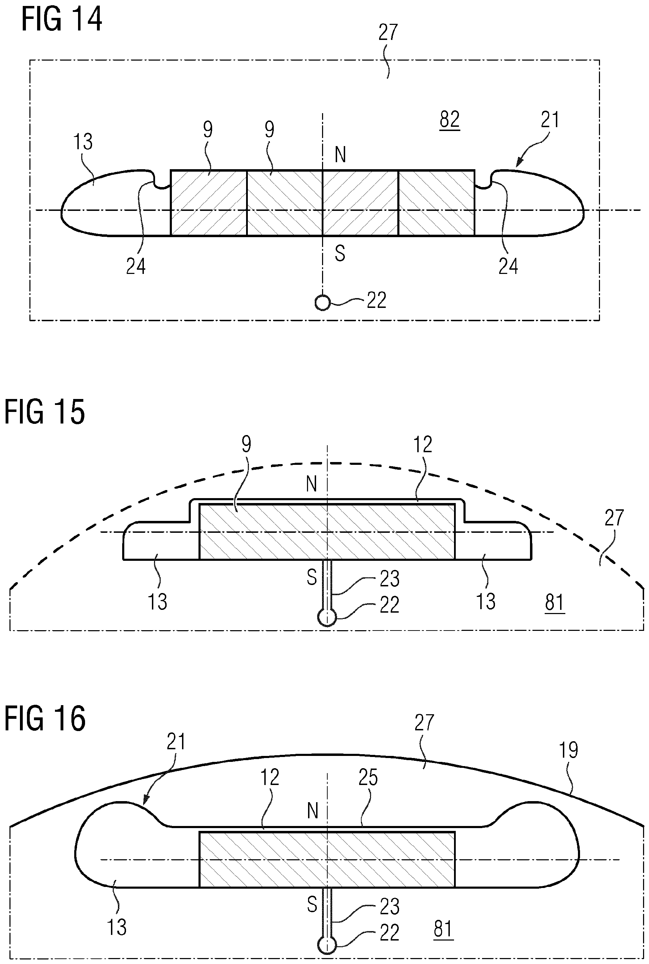

FIG 14 zeigt ein weiteres mögliches zweites Bleche 82, das zwei Haltelemente 24 aufweist.

Beispielhaft ist gezeigt, was grundsätzlich bei jeder Ausnehmung 21 der Fall sein kann, dass sich die Permanentmagnete 9 in einer Tasche 10 in Umfangsrichtung und/oder axialer Richtung aus mehreren Permanentmagneten 9 zusammensetzen können.

FIG 15 zeigt eine mögliche Ausführung eines Pols 17 eines ersten Blechs 81.

FIG 16 zeigt eine weitere mögliche Ausführung eines Pols 17 eines ersten Blechs 81.

Bei den Ausführungen nach FIG 15 und FIG 16 mündet der Zuflusskanal 23 jeweils in eine Flusssperre 13 der Ausnehmung 21.

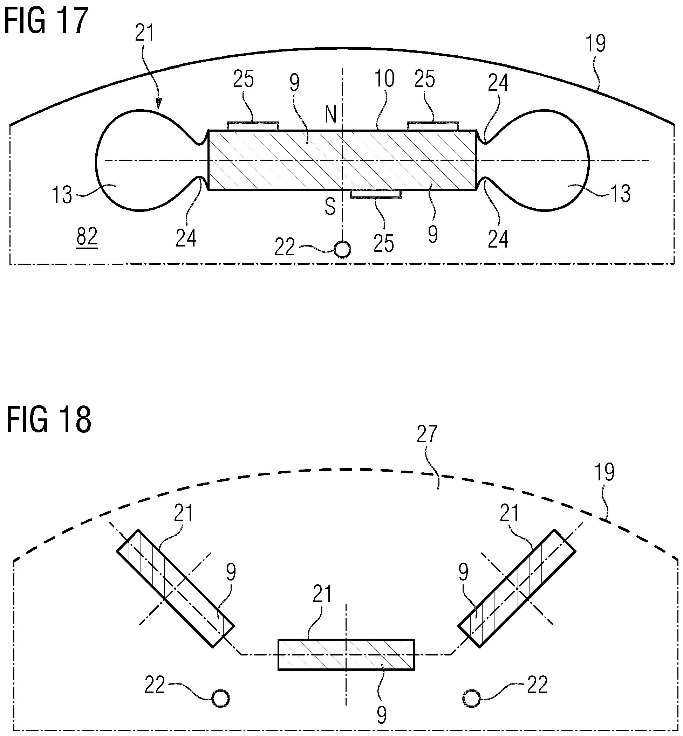

FIG 17 zeigt in einer möglichen Ausführung des zweiten Bleches 82 oder eines dritten Bleches 83 neben den Halteelementen 24, die partiellen Ausstanzungen 25, die die Verteilung des Klebers oder der Vergussmasse innerhalb einer Ausnehmung oder Tasche 10 erleichtern.

Die weiteren Figuren 18 bis 23 zeigen in nicht limitierenden oder abschließenden Ausführungen Anordnungen von Permanentmagneten 9 innerhalb eines Poles 27 und deren Bohrungen 22 als auch der Zuflusskanäle 23.

Dabei weist selbstverständlich jeder Permanentmagnet 9 nicht näher dargestellte Flusssperren 13 und zumindest abschnittsweise Haltelemente 24 auf.

Eine mit einem derartigen Rotor 5 ausgestattete permanenterregte Synchronmaschine 1 weist eine hohe Effizienzklasse auf (mindestens IE5) und ist somit für einen Antrieb, vor allem für den Dauerbetrieb von Kompressoren, Verdichtern, Förderbändern und Lüftermotoren etc., geeignet.

Die Merkmale der unterschiedlichen Ausführungen sind beliebig kombinierbar, ohne den Kern der Erfindung zu verlassen.

## Patentansprüche

1. Rotor (5) einer dynamoelektrischen permanenterregten Maschine (1) mit
einer vorgebbaren Anzahl von Polen (27),
- wobei die Pole (27) des Rotors (5) jeweils durch einen oder mehrere Permanentmagnete (9) gebildet sind,
- wobei die Permanentmagnete (9) in im Wesentlichen axial verlaufenden, umfänglich geschlossenen Ausnehmungen (21) eines Blechpakets (30) angeordnet sind,
- wobei die Ausnehmungen (21), Bereiche von Taschen (10), zur Aufnahme der Permanentmagnete (9) und Flusssperren (13), zur Führung eines Magnetflusses aufweisen, in welche Ausnehmungen (21) zumindest abschnittsweise Halteelemente (24) ragen,
- wobei radial innerhalb jedes Poles (27) ein oder mehrere axial verlaufende Bohrungen (22) im Blechpaket (30) vorgesehen sind,
- wobei das Blechpaket (30) aus zumindest zwei unterschiedlichen Einzelblechen - erste Bleche (81) und zweite Bleche (82) - in vorgebbarer axialer Reihenfolge aufgebaut ist, die jeweils eine Wellenbohrung (26), jeweils axial fluchtende Bohrungen (22), identische Anzahl von Polen (27), axial fluchtende Ausnehmungen (21) und identischen Außendurchmesser aufweisen,
- wobei die ersten Bleche (81) zusätzlich zumindest bei einem Pol (27), Schlitze (32) ausgehend von der zugordneten Bohrung (22) zu der zugehörigen Ausnehmung (21) bzw. Ausnehmungen (21) des Pols (27) aufweisen, so dass sich nach einer sich wiederkehrenden Abfolge von einer vorgebbaren Anzahl von ersten Blechen (81) und zweiten Blechen (82) Zuflusskanäle (23) zu den Polen (27) bilden,
- wobei die Zuflusskanäle (23), die Flusssperren (13), die Bohrungen (22) und die im Wesentlichen axial verlaufenden Spalte (12) zwischen dem Permanentmagneten (9) und dem jeweilig ihn umgebenden Blechpaket (3) durch einen Kleber und/oder eine Vergussmasse (20) ausgefüllt sind.

2. Rotor (5) einer dynamoelektrischen permanenterregten Maschine (1) nach Anspruch 1, **dadurch gekennzeichnet, dass** die Zuflusskanäle (23) jeweils eine axiale Ausdehnung von ein, oder zwei oder mehreren axialen Blechdicken eines ersten Bleches (81) aufweisen.

3. Rotor (5) einer dynamoelektrischen permanenterregten Maschine (1) nach einem der vorhergehenden Ansprüche, **dadurch gekennzeichnet , dass** die zweiten Bleche (82) einen oder mehrere Polsektoren (29) aufweisen, die zusätzlich Halteelemente (24) in Form von Randstegen und/oder Haltestegen und/oder Haltenasen und/oder Stegen aufweisen und/oder partielle Ausstanzungen (25) an den Taschen (10) aufweisen.

4. Rotor (5) einer dynamoelektrischen permanenterregten Maschine (1) nach einem der vorhergehenden Ansprüche, **dadurch gekennzeichnet , dass** ein, zwei oder alle drei Arten von Blechen (81,82,83) und/oder eine Verteilscheibe (16) mit einer Welle (6) drehfest verbunden sind.

5. Rotor (5) einer dynamoelektrischen permanenterregten Maschine (1) nach einem der vorhergehenden Ansprüche, **dadurch gekennzeichnet , dass** eine Einmündung des Zuflusskanals (23) in die Ausnehmung (21) des zugeordneten Pols (27) an ersten Blechen (81) erfolgt und dort in die Ausnehmung (21) eintritt, wo die geringste Beeinträchtigung des magnetischen Flusses im Betrieb der dynamoelektrischen Maschine (1) eintritt.

6. Rotor (5) einer dynamoelektrischen permanenterregten Maschine (1) nach einem der vorhergehenden Ansprüche, **dadurch gekennzeichnet, dass** an zumindest einer Stirnseite des Blechpakets (30) des Rotors (5) eine Verteilscheibe (16) für einen Kleber und/oder Vergussmaterial vorgesehen ist.

7. Rotor (5) einer dynamoelektrischen permanenterregten Maschine (1) nach Anspruch 6, **dadurch gekennzeichnet, dass** die Verteilscheibe (16) zumindest einen Ringkanal (18) zumindest auf Höhe der Bohrungen (22) aufweist.

8. Rotor (5) einer dynamoelektrischen permanenterregten Maschine (1) nach einem der vorhergehenden Ansprüche, **dadurch gekennzeichnet, dass** die Taschen (10) der Ausnehmungen partielle Ausstanzungen (25), insbesondere bei den ersten Blechen (81) oder dritten Blechen (83) aufweisen.

9. Rotor (5) einer dynamoelektrischen permanenterregten Maschine (1) nach Anspruch 8, **dadurch gekennzeichnet, dass** partiellen Ausstanzungen (25) im axialen Verlauf der jeweiligen Tasche (10) betrachtet mäandern.

10. Dynamoelektrische Maschine (1), insbesondere permanenterregte dynamoelektrische Maschine mit einem Rotor (5) nach einem der vorhergehenden Ansprüche.

11. Verfahren zur Herstellung eines Rotors (5) einer dynamoelektrischen permanenterregten Maschine (1) nach Anspruch 1 durch folgende Schritte:
- Paketieren eines Blechpakets (30) aus axial geschichteten Blechen (8) mit mindestens zwei unterschiedlichen Blechen, ersten Blechen (81) und zweiten Blechen (82) in vorgebbarer axialer Reihenfolge, welche Bleche (8) zumindest einen gleichen Durchmesser, eine gleiche Anzahl von Polen (27), einen gleichen Außendurchmesser, axial fluchtende Ausnehmungen und axial fluchtende Bohrungen aufweisen,
- wobei die Ausnehmungen (21), Bereiche von Taschen (10), zur Aufnahme der Permanentmagnete (9) und Flusssperren (13), zur Führung eines Magnetflusses aufweisen,
- wobei die Pole (27) des Rotors (5) jeweils durch einen oder mehrere Permanentmagnete (9) gebildet werden,
- wobei die ersten Bleche (81) zumindest bei einem Pol (27) zumindest einen Schlitz (32) von der Bohrung (22) zu den jeweiligen Ausnehmungen (21) aufweisen, wobei die ersten Bleche (81) nach einer vorgebbaren Anzahl von weiteren Blechen (8), insbesondere zweiten Blechen (82) um einen Pol (27) weitergedreht werden, so dass jeder Pol (27) in vorgebbaren axialen Abständen Zuflusskanäle (23) aufweist,
- Einsetzen von Permanentmagneten (9) in die Ausnehmungen (21),
- Anbringen einer Verteilscheibe (16) an zumindest einer Stirnseite des Blechpakets (30), mit zumindest einer Zuführöffnung (15) und zumindest einem Ringkanal (18) auf der dem Blechpaket (30) zugewandten Seite, der die Bohrungen (22) bedeckt,
- Vergießen der Hohlräume, insbesondere die Zuflusskanäle, die Flusssperren (13), die Bohrungen (22) und die im Wesentlichen axial verlaufenden Spalte (12) zwischen den Permanentmagneten (9) und dem jeweilig ihn umgebenden Blechpaket durch einen Kleber und/oder eine Vergussmasse (20), sodass zumindest die Permanentmagnete (9) fixiert werden.

12. Verfahren zur Herstellung eines Rotors (5) nach Anspruch 11, **dadurch gekennzeichnet, dass** über die Zuführöffnung (15) der Verteilscheibe (16), den Bohrungen (22), den Zuflusskanälen (23) Vergussmasse (20) oder Kleber, insbesondere eine thixologische Vergussmasse mittels eines vorgebbaren Druckes in den Rotor (5), insbesondere in die Ausnehmungen (21) gegeben wird.

13. Verfahren zur Herstellung eines Rotors (5), nach Anspruch 11 oder 12, **dadurch gekennzeichnet, dass** die zumindest eine Verteilscheibe (16) nach dem Herstellungsprozess entfernt wird.

14. Verwendung eines Rotors (5) bei dynamoelektrischen Maschinen (1), die insbesondere bei Kompressoren, Verdichtern, Pumpen, Lüftermotoren, Antrieb von Förderbändern, in der Nahrungsmittelindustrie, bei maritimen Anwendungen z.B. in Schiffen eingesetzt werden.
